**Europäisches Patentamt**

**European Patent Office**

**Office européen des brevets**

(11) Veröffentlichungsnummer: **0 198 938**

**A1**

(12) # EUROPÄISCHE PATENTANMELDUNG

(21) Anmeldenummer: 85104979.1

(22) Anmeldetag: 24.04.85

(51) Int. Cl.⁴: **A 23 P 1/14**
**A 23 L 3/18**

(43) Veröffentlichungstag der Anmeldung:
29.10.86 Patentblatt 86/44

(84) Benannte Vertragsstaaten:
AT BE CH DE FR GB IT LI LU NL SE

(71) Anmelder: MILUPA AKTIENGESELLSCHAFT

D-6382 Friedrichsdorf/Taunus(DE)

(72) Erfinder: Braun, Rainer, Dipl.-Ing.
Junkernfeldstrasse 6
D-6382 Friedrichsdorf(DE)

(72) Erfinder: Schweikhardt, Friedrich, Dr.
Falkenweg 1
D-6382 Friedrichsdorf 2(DE)

(74) Vertreter: Hansen, Bernd, Dr.rer.nat. et al,
Hoffmann, Eitle & Partner Patentanwälte Arabellastrasse
4 Postfach 81 04 20
D-8000 München 81(DE)

(54) Verfahren zur Herstellung keimarmer Lebensmittelpräparate.

(57) Zur Herstellung extrem keimarmer (Keimzahl < 100/g) Lebensmittelpräparate, insbesondere für Säuglings- und Kindernahrung, auch aus mikrobiologisch stark kontaminierten Grundstoffen, wobei in Kombination dazu eine stückige, jedoch instantfähige Konsistenz des Präparats mit guter Wasseraufnahmefähigkeit und Weiterverarbeitbarkeit erzielt wird, erfolgt eine Verfahrensbehandlung derart, daß die feinzerteilte und durchmischte Masse der Ausgangsstoffe zunächst auf eine homogene Temperatur von 100 bis 160°C, vorzugsweise 110–150°C, vorgewärmt und anschließend kurzzeitig, vorzugsweise ca. 2–3 Sekunden und gleichmäßig durchwärmt auf eine Temperatur von bis zu 160–180°C erhitzt wird. Ausführungsmäßige Möglichkeit für diese zweistufige Erwärmung, insbesondere der Kurzzeiterhitzung, vorzugsweise unter Druck bis zu 120 bar erfolgt die Behandlung in einem Extruder.

EP 0 198 938 A1

./...

KERN, LANG, BARG & PARTNER  0198938

PATENT- u. RECHTSANWÄLTE  MÜNCHEN

MILUPA AG  24. April 1985


Verfahren zur Herstellung keimarmer Lebensmittelpräparate


Die Erfindung betrifft ein Verfahren zur Herstellung keimarmer Lebensmittelpräparate, insbesondere aus Käse-, Fleisch-, Fisch- und Gemüseprodukten für Säuglings- und Kleinkindernahrung unter Erhitzung bzw. Erwärmung der feinzerteilten und durchmischten Ausgangsstoffe.

Die Herstellung von getrocknetem Gemüse-, Käse-, Fleisch- und Fischpulver im großtechnischen Maßstab erfolgt bisher üblicherweise mit Hilfe der Walzentrocknung, der Bandtrocknung, der Sprühtrocknung oder der Gefriertrocknung.

Getrocknete Fleisch- und Fischprodukte werden z.Zt. im wesentlichen mit Hilfe der Gefriertrocknung hergestellt. Käsepulver wird alternativ sprüh- oder gefriertrocknet. Die Sprühtrocknung ist nur möglich, wenn dem Käse Schmelz-salze und Trägerstoffe zugesetzt werden, was den Einsatz bei diätetischen Lebensmitteln wesentlich einschränkt.

Gemüsepulver können generell mit der Band- oder Gefriertrocknung getrocknet und anschließend gemahlen werden. Die so hergestellten Gemüsepulver sind meist nicht vollständig aufgeschlossen und vorgekocht, da vor der Band- oder Gefriertrocknung in der Regel das Gemüse nur blan-chiert wird. Bei einigen Gemüsearten ist auch eine Sprühtrocknung möglich. Von den derzeit verwendeten Technologien zur Trocknung von Fleisch, Fisch, Gemüse und Käse ist die Gefriertrocknung zwar qualitativ gut, jedoch sehr kostenintensiv.

Alle bekannten Verfahren haben den Nachteil, daß deren Produkte bakteriologisch in einem Ausmaß belastet sind, die eine Verwendung bei der Herstellung diätetischer Lebensmittel für Säuglinge und Kleinkinder nicht erlaubt.

Eine Ausnahme bildet die Sprühtrocknung, mit der unter gewissen Voraussetzungen bei einigen wenigen Gemüsepulvern (z.B. Karotte, Sellerieknolle) ein bakteriologisch einwandfreies Produkt hergestellt werden kann.

Die derzeit auf dem Markt befindlichen Fleisch-, Fisch-, Gemüse- und Käsepulver haben in der Regel alle eine hohe bakteriologische Belastung (Keimzahlen bei $10^5 - 10^6$/g). Auch haben alle bisher auf dem Markt befindlichen Rohstoffe dieser Herkunft eine relativ stark beschränkte Haltbarkeit, und zwar insbesondere wegen zu hoher Restfeuchte der Produkte, wegen der zu hohen Keimzahlen und Kontamination mit Hefen und Schimmel sowie wegen noch vorhandener Restenzymaktivitäten (Peroxydasen).

Das z.Zt. bei der Verbesserung der bakteriologischen Qualität benutzte Verfahren der Äthylenoxyd-Begasung bringt nur einen geringen Effekt. Außerdem sind chemische Reaktionen von Inhaltsstoffen mit Äthylenoxyd denkbar.

Der Einsatz der o. g. Rohstoffe für Säuglings- und Kleinkindernahrungen erfordert stets eine thermische Vorbehandlung, die meist infolge der besonderen technologischen Eigenschaften dieser Rohstoffe, wie Viskosität, Löslichkeit, Hygroskopizität u. ä., bei der Verarbeitung besondere Probleme bereiten.

Die im allgemeinen verwendeten Verfahren zur großtechnischen Herstellung im Fleisch-, Gemüse-, Fisch- und Käsepulver haben mithin bei der Entwicklung und Herstellung von Säuglings- und Kleinkindernahrungen folgende Nachteile:

1. Die bakteriologische Qualität entspricht in der Regel nicht dem § 14 Diät-VO.
2. Es wird üblicherweise das ungünstige Verfahren der Äthylenoxyd-Begasung durchgeführt, um die Keimzahlen zu reduzieren.
3. Es ist eine thermische Zwischenbehandlung zusammen mit Trägerstoffen erforderlich, um (a) die Rohstoffe vorzukochen und aufzuschließen und (b) die Keimzahl zu reduzieren.
4. Die Haltbarkeit ist zu kurz.
5. Stückige Komponenten sind wegen der mangelnden Rehydratisierung nicht möglich.

Aufgabe der Erfindung ist es, die Nachteile bekannter Verfahren zu vermeiden, d.h. insbesondere die Herstellung extrem keimarmer (Keimzahl < 100/g) Lebensmittelpräparate, insbesondere für Säuglings- und Kindernahrung, auch aus mikrobiologisch stark kontaminierten Grundstoffen, wobei in Kombination dazu eine stückige, jedoch instantfähige Konsistenz des Präparats mit guter Wasseraufnahmefähigkeit und Weiterverarbeitbarkeit erzielt wird.

Es sollen also erfindungsgemäß beispielsweise gemüse-, fleisch-, käse- und fischhaltige Produkte in Trockenform von hygienisch einwandfreier Qualität und gutem Rehydratisierungsrad für Säuglinge und Kleinkinder hergestellt werden, d.h. hygienisch einwandfreie gemüse-, fleisch-, käse- und fischhaltige Produkte in Trockenform von hygienisch einwandfreier Qualität und gutem Rehydratisierungsgrad für Säuglinge und Kleinkinder hergestellt werden,d.h. Gemüse-, Fleisch-, Käse- und Fischprodukte in pulverförmiger und stückiger Form, die den besonderen Anforderungen des § 14 Diät-VO entsprechen, insbesondere hinsichtlich der bakteriologischen Qualität und Stabilität,wobei z.B. bakteriologisch hochbelastete grieß- oder pulverförmige Gemüse-, Fleisch-, Fisch- und Käseprodukte verarbeitet werden.

Überraschenderweise hat es sich gezeigt, daß sich dafür erfindungsgemäß ein Verfahren der eingangs genannten Art eignet, bei dem die feinzerteilte und durchmischte Masse der Ausgangsstoffe zunächst auf eine homogene Temperatur von 100 bis 160°C, vorzugsweise 110-150°C, vorgewärmt und anschließend kurzzeitig, vorzugsweise ca. 2-3 Sekunden und gleichmäßig durchwärmt auf eine Temperatur von bis zu 160 - 180°C erhitzt wird.

Dabei ist von speziellem Vorteil, wenn die gleichmäßig durchgewärmte Erhitzung unter Erhöhung des Drucks bis zur Größenordnung von bis zu 120 bar, vorzugsweise zwischen 10 bis 80 bar bzw. zwischen 10 bis 45 bar, erfolgt.

Ein solches Verfahren läßt sich in einer Ausführungsform dadurch verwirklichen, daß die homogene Vorwärmung in einem Extruder vorgenommen wird, dessen in Kontakt mit der durchmischten Masse der Ausgangsstoffe befindlichen Teile auf der Vorwärmtemperatur gehalten werden, und daß die Erhitzung durch die Reibung und Druckerhöhung vor der Düse des Extruders erfolgt und die Masse dabei und in der Extruderdüse gleichzeitig zu verdichteter Konsistenz zusammengepreßt wird, sodann in Einzelstücke zerteilt und nachgetrocknet wird. Dafür ist eine Verweilzeit im Extruder zwischen 5 bis 15 Sek. oder 5 bis 10 Sek., vorzugsweise von 7 bis 10 Sek. vorgesehen.

Die mit dem erfingungsgemäßen Verfahren erzielten Vorteile liegen in einem (auch hinsichtlich Hefen und Schimmel) extrem keimarmen Produkt, das zudem eine verbesserte Lagerungsfähigkeit (bis z.B. 12 Monaten), geringe Restfeuchte sowie ausgeschaltete Peroxydasen aufweist und daher insbesondere für Säuglings- und Kindernahrung Verwendung finden kann und zudem in einem Arbeitsgang mit der Verarbeitung zu stückiger Konsistenz herstellbar ist und trotzdem eine ausgezeichnete Instantfähigkeit aufweist. Eine gesonderte Äthylen-Vorbehandlung ist nicht mehr notwendig und es tritt keine Geschmacks- und Aromabeeinträchtigung ein.

Als Ausgangsstoff können rohe, vorgetrocknete und gemahlene Grundstoffe mit erhöhter Keimzahl bzw. Keim-Kontamination mit dem Verfahren aufgeschlossen werden.

Das fertige Verfahrensprodukt besitzt eine gute Wasseraufnahmefähigkeit (Quellbarkeit) und ist - z.B. bei Gemüse - bereits vorgekocht und kann entweder stückig ohne Struktur oder nachträglich aus diesem gemahlen vorliegen. Schließlich zeichnet sich das erfindungsgemäße Verfahren durch eine wesentlich verbesserte Wirtschaftlichkeit auch hinsichtlich der ausgezeichneten Sterilisation sowie der vereinfachten Verfahrenseinstellung bezüglich Viskosität, Löslichkeit und hygroskoper Eigenschaften aus,und das fertige Produkt besitzt eine verbesserte Verdaulichkeit und Verträglichkeit, insbesondere für Säuglinge und Kleinkinder.

Erfindungsgemäß kann der Masse der Ausgangsstoffe vor der Vorerwärmung Wasser zugesetzt werden, wobei der Wasserzusatz vorzugsweise bei 15 Gew. % liegen kann. Eine verbesserte Rehydratisierbarkeit des stückigen Fertigprodukts läßt sich erfindungsgemäß erreichen, indem Ausgangsrohstoffen Cerealien, z.B. Weizen-, Mais- oder Reisgrieß zugemischt werden.

Ebenso kann bei Fleischbestandteilen im Ausgangsrohstoff Sojaeiweiß als Zusatz zugemischt werden.

In spezieller Anwendung des erfindungsgemäßen Verfahrens können bei Verwendung von reinem Gemüsepulver als Ausgangsrohstoff, beispielsweise aus Spinat, Sellerieknollen, Sellerieblatt, Lauch, Blumenkohl, Linsen, Tomaten, Gartenerbsen, Kresse, Petersilie, Weißkohl, Bohnen und Spargel, die Verfahrensbedingungen derart eingestellt werden, daß diese lediglich unter Zusatz von Wasser im gleichen Verfahren ganz aufgeschlossen und vorgekocht werden.

Eine weitere Variation des erfindungsgemäßen Verfahrens kann in der Zugabe von Gemüsen zu den Ausgangsrohstoffen bestehen .

Als wichtiges Kombinationsmerkmal der Erfindung kann das extrudierte Produkt in Stücke, vorzugsweise mit poröser Struktur, zerteilt werden, wobei auch kleinkörnigere Stücke die erfindungsgemäßen Vorteile gewährleisten können.

Rein verfahrensmäßig kann die Wasseraufnahmefähigkeit, Quellfähigkeit und Konsistenz des fertigen Präparats durch die Parameter Temperatur- und Druckführung und Feuchte im Extrudervorgang eingestellt werden.

Das erfindungsgemäße Verfahren ist in verschiedenen Extruder-Vorrichtungen durchführbar, wobei Wasserzusatz bei Verwendung eines 1-Schnecken-Extruders bei der vorhergehenden Durchmischung erfolgt und je nach Ausgangsfeuchte der Ausgangsrohstoffe ca. 1 - 20 Gew. % beträgt.

Bei Wasserzugabe direkt in den Extruder z.B. mittels Kegelflußmesser kann diese je nach Ausgangsfeuchte der Rohstoffe ebenfalls zwischen 1-40 Gew.% betragen.

Erfindungsgemäß kann das Produkt schließlich einer Nachtrocknung bei ca. 120-140°C unterworfen werden, wobei eine Restfeuchte von etwa 1,5 - 4 % eingestellt wird, welche die Lagerungsfähigkeit entscheidend mitbestimmt.

Das erfindungsgemäße Verfahren ist nachstehend anhand einer Schemazeichnung und Beispielen näher beschrieben.

Die Ausgangsrohstoffe z.B. Fleisch, Käse, Gemüse und Fisch werden in pulverförmiger oder grießiger Form unvermischt oder mit Cerealienzuschlägen wechselnder Konzentration vermischt aus Rohstoffsilos 1 in einen Mischer 2 eingebracht. Der Gehalt an Cerealiengrieß oder -mehl hat einen Einfluß auf den Rehydratisierungsgrad des Endproduktes. Falls gemischt wird, erfolgt dies mit einem Pflugscharmischer mit Zerhacker (z.B. System Lödige oder Draisturbulenzmischer). Die Mischzeit beträgt je nach Korngröße der Ausgangsrohstoffe 1 - 5 Minuten. Die Umdrehungszahl des Mischsystems beträgt ca. 1400 UpM, die des Zerhackers ca. 3000 UpM.

Danach wird das Produkt aus dem Mischer 2 ausgetragen und einem Schnecken- oder Vibrationsdosiergerät 3 zugeführt. Die weitere Bearbeitung in einem Extruder ist davon abhängig, ob die weitere Bearbeitung des Produktes mit einem 1-Schnecken-Extruder (z.B. Typ Anderson, Wenger, Schaaf) oder mit einem 2-Schnecken-Extruder (z.B. Werner & Pfleiderer, Creusot-Loire) erfolgt.

a) 1-Schnecken-Extruder: Nach dem Mischprozeß wird das Produkt je nach Ausgangsfeuchte der Rohstoffe mit ca. 1 - 20 % Wasser versetzt, um es im Extruder optimal aufzuschließen. Bei einem sog. "Wenger"-Extruder z.B. ist eine Teil-Wasserzugabe in den Extruder direkt möglich.

b) 2-Schnecken-Extruder: Hier erfolgt die Wasserzugabe in Abhängigkeit von der Ausgangsfeuchte der Rohmaterialien in Höhe von ca. 1 - 40 % direkt mittels Kegeldurchflußmesser in den Extruder.

Die so behandelten Rohstoffe oder Rohstoff/Cerealien-Gemische werden dem Extruder 4 kontinuierlich zugegeben, dessen Gehäuse mittels indirekter thermostatisch gesteuerter Beheizung auf einer Temperatur von ca. 100 - 150°C gehalten wird.

Je nach Produktmenge und Extruderschneckenzahl, Einsatz von Stauelementen, Schneckenkonfiguration, lassen sich aufgrund der Kompression bzw. mechanischer Bearbeitung des Gutes vor der Extruder-Düse 5 Temperaturen bis etwa 170/180 °C und Drücke bis 120 bar erzielen.

Diese Temperatureinwirkung - verbunden mit hohem Druckbewirkt eine Sterilisierung des Produktes, so daß dieses
die Extruder-Düse 5 keimfrei verläßt. In Abhängigkeit der
Schneckendrehzahl läßt sich die Verweilzeit des Produktes
im Extruder so steuern, daß nur mit geringen Geschmacks-
und Aromaverlusten zu rechnen ist. Die Verweilzeit im
Extruder 4 bzw. in der Extruder-Düse 5 beträgt bei Drehzahlen zwischen 200 - 400 UpM max. 10 sec. Diese Zeit
ist jedoch ausreichend, um ein steriles Produkt zu erzeugen. Die Verweilzeit im Extruder 4 und insbesondere
die Temperatur- und Druckführung können gesteuert werden
und beeinflussen Instanteigenschaft, Quellung und Konsistenz des Extrudates. Die Extrudate werden bei Verlassen der Extruder-Düse 5 mittels rotierender Granuliermesser in Abhängigkeit von der Drehzahl (max. ca. 3000
UpM, je nach Produkt) zu mehr oder weniger großen Stücken
geschnitten. Die bei der Expansion nach der Extruder-Düse 5 aufgetretenen Brüden müssen mittels Absaugschirm 6
und einem nicht dargestellten Absaugventilator entfernt
werden, um im Granulierraum eine trockene Atmosphäre zu
schaffen.

Die geschnittenen Extrudate werden in einem geschlossenen, belüfteten Rohrsystem einem Band- oder Fließbett-
Trockner 7 übergeben und bei 120 - 140°C nachgetrocknet.
Dabei wird je nach Produkt eine Restfeuchte von 1,5 -
4 % in Abhängigkeit der Verweilzeit erreicht. Danach
wird das Produkt in einem anschließenden Fließbett-
oder Bandtrockner 8 auf Raumtemperatur gekühlt.

Diese Behandlung des geschnittenen Extrudats ist erforderlich, weil
1. der dem Extrudat anhaftende Wasserdampf entfernt werden muß,

2. das Produkt dadurch eine sehr trockene und spröde, poröse Beschaffenheit erhält, die für die spätere Rehydratisierung und Vermahlungsmöglichkeit von Bedeutung ist,
3. dadurch ein Instanteffekt erreicht wird, und
4. die Produkte ohne weitere Ausdünstung unmittelbar in wasserdampfundurchlässige Behältnisse verpackt werden können.

Die zur Trocknung und Kühlung eingesetzte Luft muß gefiltert und getrocknet sein.

Die so hergestellten Extrudate können wahlweise in kleinen Stücken (Kantenlänge bzw. Durchmesser ca. 0,3 - 1,0cm) weiterverarbeitet werden oder aber gemahlen oder gerieben als Rohstoff weiter eingesetzt werden. Die Mahlung erfolgt vorzugsweise auf einer Universal-Schlagkreuz/Gebläsemühle, um eine weitere thermische Belastung der Produkte auszuschließen. Zur Verreibung der Extrudate können Reiben, wie z.B. Alexanderreiben, verwendet werden.

Die Übergabe der Produkte - vorzugsweise durch pneumatische Förderung - von der Vermahlung oder Verreibung der Extrudate in die Verpackung z.B. eine Absack-Anlage 9 soll ebenfalls in geschlossenem System erfolgen.

Das gleiche gilt für die Zwischenlagerung in einem Puffer-Silo 10 und einer diesem nachgeschalteten Siebmaschine 11, in der Über- und Unterkorngrößen abgetrennt werden.

Durch die Nachbehandlung der Extrudate

nach dem Extrudierprozeß erfolgt eine Rekontamination der Produkte, die jedoch im Vergleich zur bakteriologischen Ausgangssituation extrem niedrig ist. Das Verfahren bewirkt vor allem auch eine erhebliche Reduktion pathogener Keime, so daß die Rohstoffe zur Herstellung von Säuglings- und Kleinkindernahrungen geeignet sind. Die Produkte sind durch die Behandlung aufgeschlossen und nicht mehr roh, so daß die Verdaulichkeit und Verträglichkeit gewährleistet ist.

Durch die Einwirkung von hoher Temperatur und hohem Druck werden die in den Rohstoffen vorhandenen Enzyme weitgehend inaktiviert. Dadurch wird eine erhebliche Verbesserung der Haltbarkeit erzielt.

Folgende Beispiele können für das erfindungsgemäße Verfahren
gegeben werden:


Beispiel 1    Rindfleisch

"           2    Hühnerfleisch

"           3    Käse (Gouda)

"           4    Fisch (Dorsch)

"           5    Erbse / Cereal

"           6    Karotte / Cereal

"           7    pure Kresse

"           8    purer Spinat

"           9    pure Sellerieknollen

## Beispiel 1: Rindfleischextrudat

Zur Anwendung kommt hierbei vorzugsweise gefriergetrocknetes Rindfleisch, weil diese Trocknungsart die schonendste ist, um beste Trockenfleischqualitäten zu erzielen. Aufgrund des Fettgehaltes des Trockenfleisches, der bei ca. 25 % liegt, ist es sinnvoll, Cerealien und Eiweißträgerstoffe zuzusetzen, um expandierte Fleischerzeugnisse mit entsprechend gewünschter Rehydratisierung zu erhalten.

Die Fleischextrudate können zur besseren Geschmacksgebung auch gewürzt werden.

Rezeptur:    20 % gefriergetrocknetes mageres Rindfleisch 30 % Sojaprotein (z. B. Nurupan) 48 % Reismehl 2 % Hügli-Klare-Fleischbrühe

              100 %

Die Extrusion erfolgte auf einem 2-Schnecken-Extruder unter folgenden Bedingungen:

| | |
|---|---|
| Drehzahl | 270 min$^{-1}$ |
| Drehmoment | 36 % |
| Materialdruck | 30 bar |
| Wasserzusatz | ca. 6 % |
| Produkttemperatur | 170 $^{\circ}$C |

Ergebnisse:

| | vor Extrusion | nach Extrusion |
|---|---|---|
| Keimzahl | 130 000/g | < 100/g |
| colif. Keime | | 3 x neg/0,1 g |
| Kaseolyten | | < 10/g |
| B. cereus | | < 10/g |
| Schimmel | | < 10/g |
| SV | | 70 ml/20 g |
| Restfeuchte | | 3,6 % |

## Beispiel 2: Hühnerfleischextrudat

Wie in Beispiel 1 beschrieben und begründet, kommt auch hier gefriergetrocknetes, mageres Hühnerfleisch zum Einsatz.

Rezeptur: 20 % gefriergetrocknetes Hühnerfleisch (mager) 30 % Sojaeiweiß (Nurupan) 48 % Reismehl 2 % Klare Fleischbrühe Hügli

      ———

     100 %

     ===

Die Extrusion erfolgte auf einem 2-Schnecken-Extruder unter folgenden Bedingungen:

| | |
|---|---|
| Drehzahl | 270 $min^{-1}$ |
| Drehmoment | 38 % |
| Materialdruck | 45 bar |
| Wasserzusatz | ca. 6,5 % |
| Produkttemperatur | 165 °C |

Ergebnisse:

|               | vor Extrusion        | nach Extrusion    |
| ------------- | -------------------- | ----------------- |
| Keimzahl      | $4 \times 10^5$/g    | < 100/g           |
| colif. Keime  |                      | 3 x neg/0,1 g     |
| Kaseolyten    |                      | < 40/g            |
| B. cereus     |                      | < 10/g            |
| Schimmel      |                      | < 10/g            |
| SV            |                      | 55 ml/ 20 g       |
| Restfeuchte   |                      | 3,2 %             |

0198938

### Beispiel 3: Käseextrudat (Gouda)

Grundsätzlich kommt gefriergetrockneter Käse zum Einsatz.
Aufgrund seines Fettgehaltes von ca. 45 % ist auch hier ein
Verschnitt mit Getreide erforderlich, um expandierte Extrudate zu erhalten.

Rezeptur:    20 % gefriergetrockneter Gouda-Käse

           80 % Reismehl

          ————

         100 %

         ════

Die Extrusion erfolgte auf einem 2-Schnecken-Extruder unter
folgenden Begindungen:

| | |
|---|---|
| Drehzahl | 270 min$^{-1}$ |
| Drehmoment | 52 % |
| Materialdruck | 20 bar |
| Wasserzusatz | ca. 10 % |
| Produkttemperatur | 145 $^{\circ}$C |

Die Produkte Cheddar-, Tilsiter- und Parmesankäse wurden
ebenfalls verarbeitet.

Ergebnisse:

|  | vor Extrusion | nach Extrusion |
|---|---|---|
| Keimzahl | $2 \times 10^4$/g | 300/g |
| colif. Keime | | $3 \times$ neg/0,1 g |
| Kaseolyten | | < 10/g |
| B. cereus | | 10/g |
| Schimmel | | < 10/g |
| SV | | 90 ml/20 g |
| Restfeuchte | | 3,7 % |

## Beispiel 4: Fischextrudat (Dorsch)

Aus Gründen der Qualität hinsichtlich Sensorik wurde hierbei gefriergetrockneter Dorsch ohne Haut und Grätenanteil eingesetzt. Da auch Fisch einen relativ hohen Ölanteil hat, muß ein Verschnitt mit Cerealien erfolgen. Zur Geschmacksabrundung wurden Gewürze zugesetzt.

Rezeptur:     20 % gefriergetrockneter Dorsch 78 % Reismehl

             2 % Gewürzmischung
           ————

        100 %

Die Extrusion erfolgte auf einem 2-Schnecken-Extruder unter folgenden Bedingungen:

| | |
|---|---|
| Drehzahl | 270 min$^{-1}$ |
| Drehmoment | 60 % |
| Materialdruck | 20 bar |
| Wasserzusatz | 6,5 % |
| Produkttemperatur | 160 °C |

Ergebnisse:

| | vor Extrusion | nach Extrusion |
|---|---|---|
| Keimzahl | $3 \times 10^5$/g | 900/g |
| colif. Keime | | 3 x neg/0,1 g |
| Kaseolyten | | 50/g |
| B. cereus | | < 10/g |
| Schimmel | | 10/g |
| SV | | 120 ml/20 g |
| Restfeuchte | | 3,8 % |

0198938

## Beispiel 5: Erbsenextrudat

Rezeptur:    20 % Gartenerbspulver, bandgetrocknet

           80 % Reismehl

          ———

          100 %

          ═══

Zur Geschmacksabrundung können Gewürze in der Größenordnung von ca. 2 % zugesetzt werden.

Die Extrusion erfolgte auf einem 2-Schnecken-Extruder unter folgenden Bedingungen:

| | |
|---|---|
| Drehzahl | 270 min$^{-1}$ |
| Drehmoment | 74 % |
| Materialdruck | 25 bar |
| Wasserzusatz | ca. 10 % |
| Produkttemperatur | 160 $^{\circ}$C |

Ergebnisse:

| | vor Extrusion | nach Extrusion |
|---|---|---|
| Keimzahl | $10^4$/g | < 100/g |
| colif. Keime | | 3 x neg/0,1 g |
| Kaseolyten | | 10/g |
| B. cereus | | 0/0,1 g |
| Schimmel | | < 10/g |
| SV | | 120 ml/20 g |
| Restfeuchte | | 3,3 % |

## Beispiel 6: Karottenextrudat

Rezeptur:    15 % Karottenpulver

85 % Reismehl

──────

100 %

══════

Die Extrusion erfolgte auf einem 2-Schnecken-Extruder unter folgenden Bedingungen:

| | |
|---|---|
| Drehzahl | 270 $min^{-1}$ |
| Drehmoment | 70 % |
| Materialdruck | 18 bar |
| Wasserzusatz | 9 % |
| Produkttemperatur | 168 °C |

Ergebnisse:

|  | vor Extrusion | nach Extrusion |
|---|---|---|
| Keimzahl | $2 \times 10^4$/g | < 100/g |
| colif. Keime |  | 3 x neg/0,1 g |
| Kaseolyten |  | < 10/g |
| B. cereus |  | < 10/g |
| Schimmel |  | < 10/g |
| SV |  | 75 ml/20 g |
| Restfeuchte |  | 3,9 % |

## Beispiel 7: Kressepulver

Rezeptur:    100 % Kressepulver

Die Extrusion erfolgte auf einem 2-Schnecken-Extruder unter folgenden Bedingungen:

| | |
|---|---|
| Drehzahl | 270 min$^{-1}$ |
| Drehmoment | 25 % |
| Materialdruck | 10 bar |
| Wasserzusatz | ca. 10 % |
| Produkttemperatur | 137 °C |

Es wurden kugelförmige Granulate ohne wesentlichen Expansionsgrad hergestellt.

0198938

Ergebnisse:

|  | vor Extrusion | nach Extrusion |
|---|---|---|
| Keimzahl | $1 \times 10^4$/g | < 100/g |
| E. coli |  | neg 10,1 g |
| colif. Keime |  | 3 x neg/0,1 g |
| B. cereus |  | 0/0,1 g |
| Kaseolyten |  | 20/g |
| Clostridien |  | 0/0,1 g |
| SV |  | 45 ml/20 g |
| Restfeuchte |  | 4,2 % |

- 27 -

## Beispiel 8: Spinatextrudat

Rezeptur:    100 % Spinatpulver

Die Extrusion erfolgte auf einem 2-Schnecken-Extruder unter folgenden Bedingungen:

|                   |                       |
|-------------------|-----------------------|
| Drehzahl          | 270 min$^{-1}$        |
| Drehmoment        | 30 - 40 %             |
| Materialdruck     | 10 - 30 bar           |
| Wasserzusatz      | 10 %                  |
| Produkttemperatur | 140 $^{\circ}$C       |

Die Extrudate sind kugelförmig ohne wesentlichen Expansionsgrad.

Ergebnisse:

|  | vor Extrusion | nach Extrusion |
|---|---|---|
| Keimzahl | $2 \times 10^5/g$ | < 100/g |
| colif. Keime |  | 3 x neg/0,1 g |
| E. coli |  | neg/0,1 g |
| Kaseolyten |  | 10/g |
| B. cereus |  | 0/0,1 g |
| Clostridien |  | < 10/g |
| SV |  | 50 ml/20 g |
| Restfeuchte |  | 3,4 % |

## Beispiel 9: Sellerieknollenextrudat

Rezeptur:     100 % Sellerieknollenpulver

Die Extrusion erfolgte auf einem 2-Schnecken-Extruder unter folgenden Bedingungen:

| | |
|---|---|
| Drehzahl | 270 min$^{-1}$ |
| Drehmoment | 36 % |
| Materialdruck | 10 bar |
| Wasserzusatz | ca. 12 % |
| Produkttemperatur | 150 °C |

Es wurden würstchenartige Granulate ohne Expansion hergestellt.

Ergebnisse:

|  | vor Extrusion | nach Extrusion |
|---|---|---|
| Keimzahl | $4 \times 10^4$/g | 200/g |
| colif. Keime |  | 3 x neg/0,1 g |
| E. coli |  | neg/0,1 g |
| Clostridien |  | < 10/g |
| B. cereus |  | 0/0,1 g |
| Kaseolyten | – | 100/g |
| SV |  | 40 ml/20 g |
| Restfeuchte |  | 3,9 % |

MILUPA AG      1      24. April 1985

P a t e n t a n s p r ü c h e

1. Verfahren zur Herstellung keimarmer Lebensmittelpräparate, insbesondere aus Käse, Fleisch-, Fisch- und Gemüseprodukten für Säuglings- und Kleinkindernahrung unter Erhitzung bzw. Erwärmung der feinzerteilten und durchmischten Ausgangsstoffe, dadurch gekennzeichnet, daß die feinzerteilte und durchmischte Masse der Ausgangsstoffe zunächst auf eine homogene Temperatur von 100 bis 160°C, vorzugsweise 110-150°C, vorgewärmt und anschließend kurzzeitig, vorzugsweise ca. 2-3 Sekunden und gleichmäßig durchwärmt auf eine Temperatur von bis zu 160 - 180°C erhitzt wird.

2. Verfahren nach Anspruch 1, dadurch gekennzeichnet, daß die gleichmäßig durchgewärmte Erhitzung unter Erhöhung des Drucks bis zur Größenordnung von bis zu 120 bar erfolgt.

3. Verfahren nach Anspruch 2, dadurch gekennzeichnet, daß ein Druck von mindestens 10 bar bis 80 bar eingestellt wird.

4. Verfahren nach Anspruch 3, dadurch gekennzeichnet, daß ein Druck in einem Bereich zwischen 10 bar bis 45 bar eingestellt wird.

5. Verfahren nach einem der Ansprüche 1 bis 4, dadurch gekennzeichnet, daß die homogene Vorwärmung in einem Extruder vorgenommen wird, dessen in Kontakt mit der durchmischten Masse der Ausgangsstoffe befindlichen Teile auf der Vorwärmtemperatur gehalten werden, und daß die Erhitzung durch die Druckerhöhung vor der Düse des Extruders erfolgt und die Masse dabei und in der Extruderdüse gleichzeitig zu verdichteter Konsistenz zusammengepreßt wird, sodann in Einzelstücke zerteilt und nachgetrocknet wird.

6. Verfahren nach Anspruch 1, dadurch gekennzeichnet, daß die Gesamt-Verweilzeit im Extruder zwischen 5 bis 15 Sekunden oder 5 bis 10 Sekunden, vorzugsweise zwischen 7 bis 10 Sekunden beträgt.

7. Verfahren nach einem der Ansprüche 1 bis 6, dadurch gekennzeichnet, daß der Masse der Ausgangsstoffe vor der Vorerwärmung Wasser zugesetzt wird.

8. Verfahren nach einem der Ansprüche 1 bis 7, dadurch gekennzeichnet, daß den Ausgangsrohstoffen Cerealien, z.B. Weizen-, Mais- oder Reisgrieß zugemischt werden.

9. Verfahren nach einem der Ansprüche 1 bis 7, dadurch gekennzeichnet, daß bei Fleischbestandteilen im Ausgangsrohstoff Sojaeiweis als Zusatz zugemischt wird.

10. Verfahren nach einem der Ansprüche 1 bis 7, dadurch gekennzeichnet, daß bei Verwendung von reinem Gemüsepulver als Ausgangsrohstoff, beispielsweise aus Spinat, Sellerieknollen, Sellerieblatt, Lauch, Blumenkohl, Linsen, Tomaten, Gartenerbsen, Kresse, Petersilie, Weißkohl, Bohnen und Spargel, die Verfahrensbedingungen derart eingestellt werden, daß diese lediglich unter Zusatz von Wasser im gleichen Verfahren ganz aufgeschlossen und vorgekocht werden.

11. Verfahren nach einem der vorangehenden Ansprüche, dadurch gekennzeichnet, daß den Ausgangsrohstoffen Gewürze zugesetzt werden.

12. Verfahren nach einem der vorangehenden Ansprüche, dadurch gekennzeichnet, daß das extrudierte Produkt in Stücke, vorzugsweise mit poröser Struktur, zerteilt wird.

13. Verfahren nach einem der vorangehenden Ansprüche, dadurch gekennzeichnet, daß die Wasseraufnahmefähigkeit, Quellfähigkeit und Konsistenz des fertigen Präparats durch die Parameter Temperatur- und Druckführung sowie Feuchte im Extrusionsprozess eingestellt wird.

14. Verfahren nach Anspruch 7, dadurch gekennzeichnet, daß der Wasserzusatz ca. 15 Gew. % beträgt.

15. Verfahren nach Anspruch 7, dadurch gekennzeichnet, daß der Wasserzusatz bei Verwendung eines 1-Schnecken-Extruders bei der vorhergehenden Durchmischung erfolgt und je nach Ausgangsfeuchte der Ausgangsrohstoffe ca. 1 bis 20 Gew. % beträgt.

16. Verfahren nach Anspruch 7, dadurch gekennzeichnet, daß die Wasserzugabe direkt in den Extruder erfolgt, z.B. mittels Kegelflußmesser, und je nach Ausgangsfeuchte der Ausgangsrohstoffe ca. 1 - 40 Gew. % beträgt.

17. Verfahren nach einem der Ansprüche 5 bis 16, dadurch gekennzeichnet, daß die Nachtrocknung bei ca. 120 - 140 °
C erfolgt und auf eine Restfeuchte von etwa 1,5 - 4 %
eingestellt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | FR-A-2 233 946  (A. BOUTROUX)<br><br>* Seite 1, Zeilen 1-25, 33-37; Seite 2, Zeilen 9-10, 15-19, 22-26; Seite 3, Zeilen 1-3, 8-21, 22-26, 32-38; Seite 4, Zeilen 10-23, 30-37; Seite 5, Zeilen 1-4; Ansprüche 1-4, 7,12 *<br><br>--- | 1,2,5, 7-15, 17 | A 23 P   1/14<br>A 23 L   3/18 |
| X | FR-A-2 432 842  (S.A. SODES)<br><br>* Ansprüche 1,8,9; Seite 2, Zeilen 28-32; Seite 3, Zeilen 29-33 und 37; Seite 4, Zeilen 5-12 *<br><br>--- | 1,2,7, 8,12-16 | |
| X | FR-A-2 268 473  (A. GUILBOT et al.)<br><br>* Ansprüche 17,10,12,1,2,4,7,9,11 *<br><br>--- | 1,2,5-7,10, 12-15, 17 | RECHERCHIERTE SACHGEBIETE (Int Cl.4)<br><br>A 23 P |
| X | FR-A-2 251 277  (NESTLE S.A.)<br><br>* Ansprüche 1,7,8,10; Seite 4, Zeilen 9-36 *<br><br>--- | 1-7,12 -15 | |
| A | FR-A-2 340 054  (GRANDES MINOTERIES A FEVES DE FRANCE)<br><br>---            -/- | | |

Der vorliegende Recherchenbericht wurde für alle Patentansprüche erstellt.

| Recherchenort<br>DEN HAAG | Abschlußdatum der Recherche<br>18-03-1986 | Prüfer<br>GUYON R.H. |
|---|---|---|

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

**0198938**

Nummer der Anmeldung

**EUROPÄISCHER RECHERCHENBERICHT**

Europäisches Patentamt

EP 85 10 4979

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | FR-A-2 401 615 (S.A. SODES) | | |
| A | WO-A-8 301 729 (SPRUSON & FERGUSON) | | |
| A | US-A-3 447 929 (D. HALE et al.) | | |
| A | EP-A-0 105 195 (S.G. YOUNG et al.) | | |
| A | EP-A-0 041 641 (ELL ARNO) | | |

RECHERCHIERTE SACHGEBIETE (Int. Cl 4)

Der vorliegende Recherchenbericht wurde für alle Patentansprüche erstellt

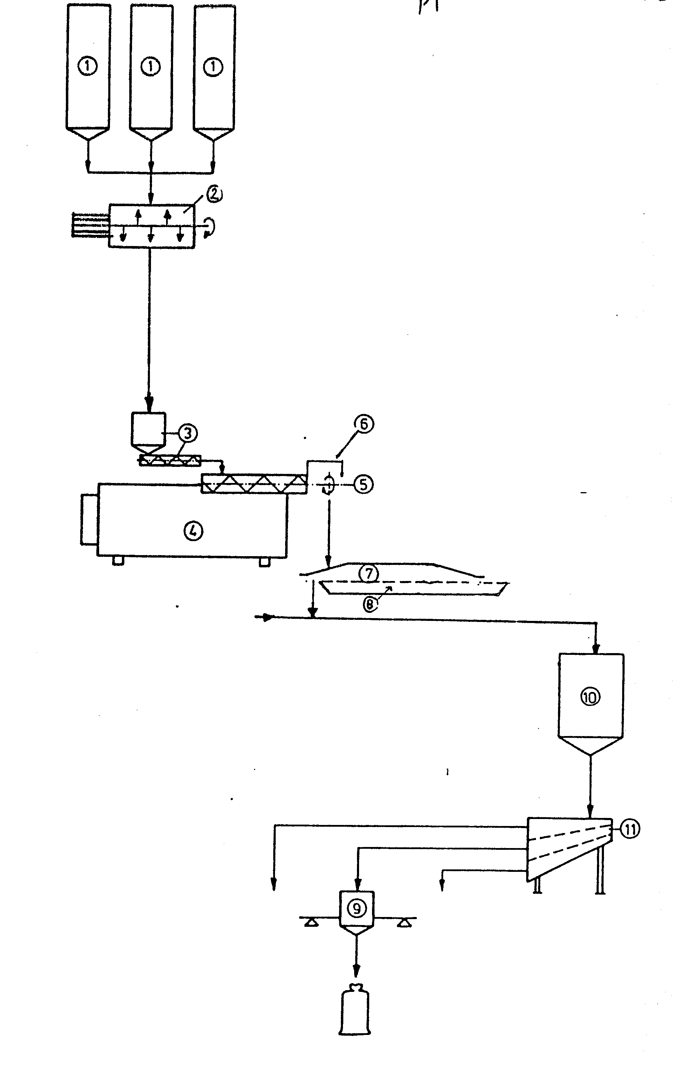

| Recherchenort | Abschlußdatum der Recherche | Prüfer |
|---|---|---|
| DEN HAAG | 18-03-1986 | GUYON R.H. |